# EUROPEAN PATENT APPLICATION

(11) **EP 4 343 674 A1**
(43) Date of publication of application: **27.03.2024**
(21) Application number: 22831939.8
(22) Date of filing: 27.06.2022
(51) Int. Cl.: G06T 1/20

(54) **CALL PROCESSING METHOD AND RELATED DEVICE THEREOF**

(30) Priority: 30.06.2021 CN 202110742725
(71) Applicant: Huawei Technologies Co., Ltd., Longgang Shenzhen, Guangdong 518129 (CN)
(72) Inventor: JIANG, Zecheng, Shenzhen, Guangdong 518129 (CN); ZHANG, Wenhao, Shenzhen, Guangdong 518129 (CN); LUO, Bei, Shenzhen, Guangdong 518129 (CN); DENG, Yixin, Shenzhen, Guangdong 518129 (CN)
(74) Representative: Maiwald GmbH
(86) International application number: PCT/CN2022/101450
(87) International publication number: WO 2023/274125

(57) **Abstract**

This application provides a call processing method and a related device, so that a CPU can optimize out a part of draw calls, and send only a few draw calls to a GPU, that is a quantity of draw calls to be processed by the CPU is greatly reduced, thereby saving a specific CPU resource and reducing CPU load. The method in this application includes: obtaining a first draw call and a second draw call; and generating, if a first storage area indicated by the first draw call and a second storage area indicated by the second draw call are discontinuous, a third draw call indicating a third storage area, where the first storage area stores a first index value of first data, the second storage area stores a second index value of second data, the third storage area stores the first index value and the second index value, the third storage area is a continuous storage area, and the first data and the second data are used to render a current image frame.

## Description

This application claims priority to Chinese Patent Application No. 202110742725.8, filed with the China National Intellectual Property Administration on June 30, 2021, and entitled "CALL PROCESSING METHOD AND RELATED DEVICE", which is incorporated herein by reference in its entirety.

### TECHNICAL FIELD

This application relates to the field of image processing technologies, and in particular, to a call processing method and a related device.

### BACKGROUND

With rapid development of technologies, a user may implement various entertainment activities on a terminal device, for example, listening to music, watching a video, and playing a game. To meet different requirements of the user, various types of applications may be usually installed on the terminal device.

To render pictures (which may also be referred to as an image frame) of some large-scale applications, a central processing unit (central processing unit, CPU) of the terminal device usually needs to receive a large quantity of draw calls (draw calls, DCs) from the applications, and send the draw calls to a graphics processing unit (graphics processing unit, GPU), so that the GPU obtains rendering data corresponding to the draw calls, and then obtains the pictures of the applications through rendering based on the rendering data, for the user to watch and use.

When rendering an image frame of an application, the CPU needs to transmit a large quantity of draw calls to the GPU, that is, the large quantity of draw calls need to be processed. This occupies a large quantity of CPU resources, and causes excessively high CPU load.

### SUMMARY

Embodiments of this application provide a call processing method and a related device, so that a CPU can optimize out a part of draw calls, and send only a few draw calls to a GPU, that is, a quantity of draw calls to be processed by the CPU is greatly reduced, thereby saving a specific CPU resource and reducing CPU load.

A first aspect of embodiments of this application provides a call processing method, and the method includes:
when an application initiates a rendering request of a current image frame to a CPU, the application may send a first draw call and a second draw call to the CPU, where the first draw call indicates a first storage area, the second draw call indicates a second storage area, the second storage area stores a second index value of second data, a third storage area stores the first index value and the second index value, and first data and second data are used to render the current image frame.

If the first storage area indicated by the first draw call and the second storage area indicated by the second draw call are discontinuous, the CPU generates a third draw call indicating a third storage area, where the third storage area stores the first index value and the second index value, the third storage area is a continuous storage area, the third storage area and the first storage area are different storage areas, and the third storage area and the second storage area are different storage areas.

After obtaining the third draw call, the CPU may send the third draw call to a GPU, so that the GPU determines the third storage area based on the third draw call, obtains the first index value and the second index value from the third storage area, and then obtains the first data and the second data separately based on the first index value and the second index value, thereby implementing rendering of the current image frame.

It can be seen from the foregoing method that: the CPU receives the first draw call and the second draw call from the application, where the first storage area indicated by the first draw call stores the first index value of the first data that is used to render the current image frame, and the second storage area indicated by the second draw call stores the second index value of the second data that is used to render the current image frame. If the first storage area and the second storage area are discontinuous, the third draw call indicating the third storage area is generated, where the third storage area is a continuous storage area. Because the third storage area indicated by the third draw call stores the first index value and the second index value, the CPU only needs to send the third draw call to the GPU, so that the GPU may obtain the first data and the second data based on the third draw call, to render the current image frame by using the first data and the second data. In this way, the CPU may optimize out a part of draw calls, and send only a few draw calls to the GPU, that is, a quantity of draw calls to be processed by the CPU is greatly reduced, thereby saving a specific CPU resource and reducing CPU load.

In a possible implementation, the first draw call includes a start location of the first storage area and a size of the first storage area, the second draw call includes a start location of the second storage area, and the generating, if a first storage area indicated by the first draw call and a second storage area indicated by the second draw call are discontinuous, a third draw call indicating a third storage area includes: generating, if a difference between the start location of the first storage area and the start location of the second storage area is not equal to the size of the first storage area, the third draw call indicating the third storage area. In the foregoing implementation, the CPU may calculate the difference between the start location of the first storage area and the start location of the second storage area, and detect whether the difference is equal to the size of the first storage area, to accurately determine whether the first storage area and the second storage area are continuous. When the difference is not equal to the size of the first storage area, the CPU may determine that the first storage area and the second storage area are discontinuous.

In a possible implementation, the generating, if a difference between the start location of the first storage area and the start location of the second storage area is not equal to the size of the first storage area, the third draw call indicating the third storage area includes: obtaining the third storage area if the difference between the start location of the first storage area and the start location of the second storage area is not equal to the size of the first storage area; storing the first index value and the second index value into the third storage area; and generating the third draw call including a start location of the third storage area and a size of the third storage area. In the foregoing implementation, after determining that the first storage area and the second storage area are discontinuous, the CPU may apply for a new continuous storage area as the third storage area. A size of the third storage area is generally equal to a sum of the size of the first storage area and the size of the second storage area. Then, the CPU reads the first index value from the first storage area, reads the second index value from the second storage area, and stores the first index value and the second index value in the third storage area. Finally, the CPU generates the third draw call that includes the start location of the third storage area in a memory and the size of the third storage area. Therefore, the third draw call may indicate the third storage area.

In a possible implementation, the method further includes: generating, if the difference between the start location of the first storage area and the start location of the second storage area is equal to the size of the first storage area, a fourth draw call including the start location of the first storage area and a size of a fourth storage area, where the fourth storage area includes the first storage area and the second storage area. In the foregoing implementation, when the difference between the start location of the first storage area and the start location of the second storage area is not equal to the size of the first storage area, the CPU may determine that the first storage area and the second storage area are continuous. In this case, the CPU may consider the first storage area and the second storage area as a whole, that is, the fourth storage area. It may be understood that the size of the fourth storage area is equal to the sum of the size of the first storage area and the size of the second storage area. A start location of the fourth storage area in the memory is the start location of the first storage area in the memory. The CPU may generate the fourth draw call including the start location of the first storage area and the size of the fourth storage area. Therefore, the fourth draw call may indicate the fourth storage area.

In a possible implementation, the obtaining the third storage area if the difference between the start location of the first storage area and the start location of the second storage area is not equal to the size of the first storage area includes: obtaining the third storage area if a first value determined based on the first draw call and the second draw call is not equal to a second value determined based on a fifth draw call and a sixth draw call, and the difference between the start location of the first storage area and the start location of the second storage area is not equal to the size of the first storage area, where the fifth draw call indicates a fifth storage area, the fifth storage area stores a third index value of third data, the sixth draw call indicates a sixth storage area, the sixth storage area stores a fourth index value of fourth data, and the third data and the fourth data are used to render a previous image frame. In the foregoing implementation, the CPU may obtain the first value determined based on the first draw call and the second draw call of the current image frame, and the second value determined based on the fifth draw call and the sixth draw call of the previous image frame. If the first value is not equal to the second value, and the first storage area and the second storage area are discontinuous, it indicates that the third storage area is not created before (that is, in a process in which the CPU processes a draw call of the previous image frame), and the CPU may apply for a new storage area as the third storage area, stores the first index value and the second index value into the third storage area, and then generates the third draw call indicating the third storage area.

In a possible implementation, the method further includes: generating, if the first value is equal to the second value, and the difference between the start location of the first storage area and the start location of the second storage area is not equal to the size of the first storage area, the third draw call including the start location of the third storage area and the size of the third storage area. In the foregoing implementation, if the first value is equal to the second value, and the first storage area and the second storage area are discontinuous, it indicates that the third storage area has been created before. Therefore, the CPU may directly reuse the created third storage area, and directly generate the third draw call indicating the third storage area.

In a possible implementation, the first value is a value obtained by performing hash calculation based on the first draw call and the second draw call, and the second value is a value obtained by performing hash calculation based on the fifth draw call and the sixth draw call. In the foregoing implementation, the CPU may perform hash calculation by using information such as a location of the first storage area, the size of the first storage area, a location of the second storage area, and the size of the second storage area, to obtain the first value. Similarly, the CPU may perform hash calculation by using information such as a location of the fifth storage area, a size of the fifth storage area, a location of the sixth storage area, and a size of the sixth storage area, to obtain the second value.

In a possible implementation, after the generating a third draw call indicating a third storage area, the method further includes: sending the third draw call to a GPU, so that the GPU determines the third storage area based on the third draw call, obtains the first index value and the second index value from the third storage area, and then obtains the first data and the second data separately based on the first index value and the second index value, thereby implementing rendering of the current image frame.

In a possible implementation, after the generating a fourth draw call including the size of the first storage area and a size of a fourth storage area, the method further includes: sending the fourth draw call to a GPU, so that the GPU determines the fourth storage area based on the fourth draw call, obtains the first index value and the second index value from the fourth storage area, and then obtains the first data and the second data separately based on the first index value and the second index value, thereby implementing rendering of the current image frame.

In a possible implementation, the first draw call and the second draw call are continuous draw calls.

A second aspect of embodiments of this application provides a call processing apparatus, where the apparatus includes: an obtaining module, configured to obtain a first draw call and a second draw call; and a first generation module, configured to generate, if a first storage area indicated by the first draw call and a second storage area indicated by the second draw call are discontinuous, a third draw call indicating a third storage area, where the first storage area stores a first index value of first data, the second storage area stores a second index value of second data, the third storage area stores the first index value and the second index value, the third storage area is a continuous storage area, and the first data and the second data are used to render a current image frame.

It can be seen from the foregoing apparatus that: the CPU receives the first draw call and the second draw call from the application, where the first storage area indicated by the first draw call stores the first index value of the first data that is used to render the current image frame, and the second storage area indicated by the second draw call stores the second index value of the second data that is used to render the current image frame. If the first storage area and the second storage area are discontinuous, the third draw call indicating the third storage area is generated, where the third storage area is a continuous storage area. Because the third storage area indicated by the third draw call stores the first index value and the second index value, the CPU only needs to send the third draw call to the GPU, so that the GPU may obtain the first data and the second data based on the third draw call, to render the current image frame by using the first data and the second data. In this way, the CPU may optimize out a part of draw calls, and send only a few draw calls to the GPU, that is, a quantity of draw calls to be processed by the CPU is greatly reduced, thereby saving a specific CPU resource and reducing CPU load.

In a possible implementation, the first draw call includes a start location of the first storage area and a size of the first storage area, the second draw call includes a start location of the second storage area, and the first generation module is configured to generate, if a difference between the start location of the first storage area and the start location of the second storage area is not equal to the size of the first storage area, the third draw call indicating the third storage area.

In a possible implementation, the first generation module is configured to: obtain the third storage area if the difference between the start location of the first storage area and the start location of the second storage area is not equal to the size of the first storage area; store the first index value and the second index value into the third storage area; and generate the third draw call including a start location of the third storage area and a size of the third storage area.

In a possible implementation, the apparatus further includes a second generation module, configured to generate, if the difference between the start location of the first storage area and the start location of the second storage area is equal to the size of the first storage area, a fourth draw call including the start location of the first storage area and a size of a fourth storage area, and the fourth storage area includes the first storage area and the second storage area.

In a possible implementation, the first generation module is configured to obtain the third storage area if a first value determined based on the first draw call and the second draw call is not equal to a second value determined based on a fifth draw call and a sixth draw call, and the difference between the start location of the first storage area and the start location of the second storage area is not equal to the size of the first storage area, where the fifth draw call indicates a fifth storage area, the fifth storage area stores a third index value of third data, the sixth draw call indicates a sixth storage area, the sixth storage area stores a fourth index value of fourth data, and the third data and the fourth data are used to render a previous image frame.

In a possible implementation, the apparatus further includes a third generation module, configured to generate, if the first value is equal to the second value, and the difference between the start location of the first storage area and the start location of the second storage area is not equal to the size of the first storage area, the third draw call including the start location of the third storage area and the size of the third storage area.

In a possible implementation, the first value is a value obtained by performing hash calculation based on the first draw call and the second draw call, and the second value is a value obtained by performing hash calculation based on the fifth draw call and the sixth draw call.

In a possible implementation, the apparatus further includes a sending module, configured to send the third draw call to a GPU.

In a possible implementation, the apparatus further includes a sending module, configured to send the fourth draw call to a GPU.

In a possible implementation, the first draw call and the second draw call are continuous draw calls.

A third aspect of embodiments of this application provides a terminal device. The terminal device includes a memory and a processor. The memory stores code. The processor is configured to execute the code. When the code is executed, the terminal device performs the method according to any one of the first aspect or the possible implementations of the first aspect.

A fourth aspect of embodiments of this application provides a computer storage medium. The computer storage medium stores one or more instructions. When the one or more instructions are executed by one or more computers, the one or more computers are enabled to perform the method according to any one of the first aspect or the possible implementations of the first aspect.

A fifth aspect of embodiments of this application provides a computer program product. The computer program product stores instructions. When the instructions are executed by a computer, the computer is enabled to perform the method according to any one of the first aspect or the possible implementations of the first aspect.

In this embodiment of this application, the CPU receives the first draw call and the second draw call from the application, where the first storage area indicated by the first draw call stores the first index value of the first data that is used to render the current image frame, and the second storage area indicated by the second draw call stores the second index value of the second data that is used to render the current image frame. If the first storage area and the second storage area are discontinuous, the third draw call indicating the third storage area is generated, where the third storage area is a continuous storage area. Because the third storage area indicated by the third draw call stores the first index value and the second index value, the CPU only needs to send the third draw call to the GPU, so that the GPU may obtain the first data and the second data based on the third draw call, to render the current image frame by using the first data and the second data. In this way, the CPU may optimize out a part of draw calls, and send only a few draw calls to the GPU, that is, a quantity of draw calls to be processed by the CPU is greatly reduced, thereby saving a specific CPU resource and reducing CPU load.

### BRIEF DESCRIPTION OF DRAWINGS

FIG. 1 is a schematic diagram of a structure of a terminal device according to an embodiment of this application;
FIG. 2 is another schematic diagram of a structure of a terminal device according to an embodiment of this application;
FIG. 3 is a schematic flowchart of a call processing method according to an embodiment of this application;
FIG. 4 is a schematic diagram of a correspondence between a VBO and an EBO according to an embodiment of this application;
FIG. 5 is a schematic diagram of an EBO according to an embodiment of this application;
FIG. 6 is another schematic diagram of an EBO according to an embodiment of this application;
FIG. 7A and FIG. 7B are another schematic flowchart of a call processing method according to an embodiment of this application; and
FIG. 8 is a schematic diagram of a structure of a call processing apparatus according to an embodiment of this application.

### DESCRIPTION OF EMBODIMENTS

Embodiments of this application provide a call processing method and a related device, so that a CPU can optimize out a part of draw calls, and send only a few draw calls to a GPU, that is, a quantity of draw calls to be processed by the CPU is greatly reduced, thereby saving a specific CPU resource and reducing CPU load.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover a non-exclusive inclusion, so that a process, method, system, product, or device that includes a series of units is not necessarily limited to those units, but may include another unit not clearly listed or inherent to such a process, method, product, or device.

With rapid development of technologies, a user may implement various entertainment activities on a terminal device, for example, listening to music, watching a video, and playing a game. To meet different requirements of the user, various types of applications may be usually installed on the terminal device.

To render a picture (which may also be referred to as an image frame) of some large-scale applications, a CPU of the terminal device usually needs to receive a large quantity of draw calls from the applications, and send the draw calls to a GPU. After obtaining the draw calls, the GPU may obtain corresponding rendering data from a storage area indicated by the draw calls, and then obtains pictures of the applications through rendering based on the rendering data, for the user to watch and use.

When rendering an image frame of an application, the CPU needs to transmit a large quantity of calls to the GPU, that is, the large quantity of calls need to be processed. This occupies a large quantity of CPU resources, and causes excessively high CPU load.

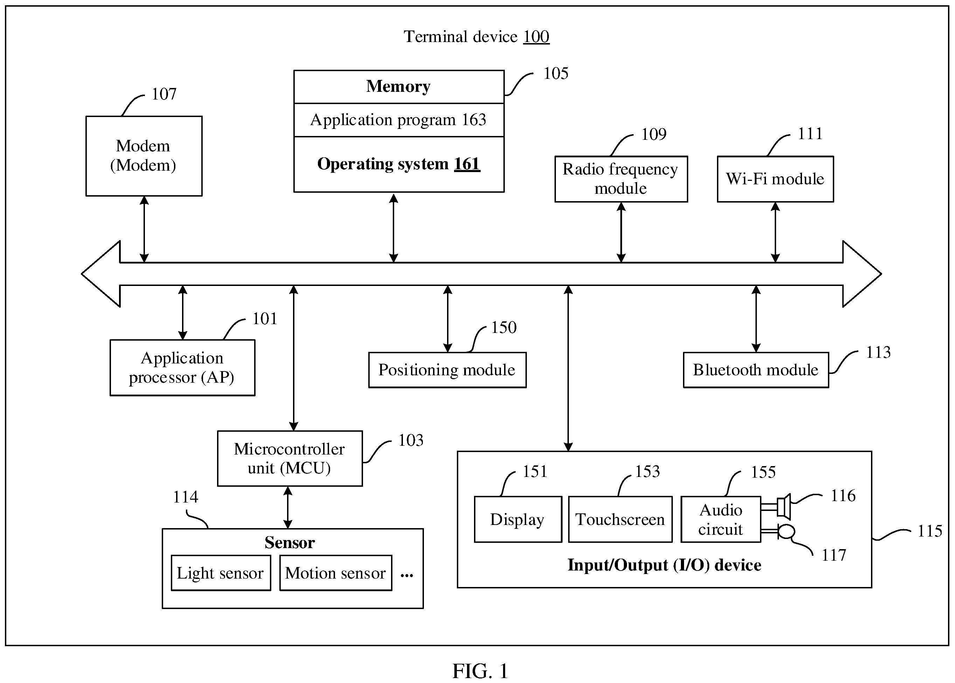

To resolve the foregoing problem, embodiments of this application provide a call processing method. The method may be implemented by a terminal device. The following first describes the terminal device provided in embodiments of this application. FIG. 1 is a schematic diagram of a structure of a terminal device according to an embodiment of this application. As shown in FIG. 1, the terminal device includes components such as a processor 101, a microcontroller unit (microcontroller unit, MCU) 103, a memory 105, a modem (modem) 107, a radio frequency (radio frequency, RF) module 109, a Wi-Fi module 111, a Bluetooth module 113, a sensor 114, a positioning module 150, and an input/output (input/output, I/O) device 115. These components can communicate with each other through one or more communication buses or signal cables. A person skilled in the art may understand that a hardware structure shown in FIG. 1 does not constitute a limitation on the mobile phone, and the mobile phone 100 may include more or fewer components than those shown in the figure, or may combine some components, or may have different component arrangements.

The following describes the components of the terminal device 100 in detail with reference to FIG. 1.

The processor 101 is a control center of the mobile phone 100, and is connected to components of the terminal device 100 through various interfaces and various buses. In some embodiments, the processor 101 may include one or more processing units.

The memory 105 stores a computer program, such as an operating system 161 and an application program 163 shown in FIG. 1. The processor 101 is configured to execute the computer program in the memory 105, to implement a function defined by the computer program. For example, the processor 101 executes the operating system 161, to implement various functions of the operating system 161 on the terminal device 100 (for example, the operating system 161 may be configured to implement the application preloading method provided in embodiments of this application). The memory 105 further stores data other than the computer program, for example, data generated in running processes of the operating system 161 and the application program 163. The memory 105 is a non-volatile storage medium, and generally includes an internal storage and an external storage. The memory includes but is not limited to a random access memory (random access memory, RAM), a cache (cache), or the like. The external storage includes but is not limited to a flash memory (flash memory), a hard disk, an optical disc, a universal serial bus (universal serial bus, USB) disk, and the like, where the hard disk may include a hard disk drive (hard disk drive, HDD) and a solid state disk (solid state disk, SSD). The computer program is usually stored in the external memory. Before executing the computer program, the processor loads the program from the external memory to the internal memory.

The memory 105 may be independent, and is connected to the processor 101 through the bus. Alternatively, the memory 105 and the processor 101 may be integrated into a chip subsystem.

The MCU 103 is a coprocessor configured to obtain and process data from the sensor 114. A processing capability and power consumption of the MCU 103 are less than those of the processor 101, but the MCU 103 has a feature of "always on (always on)", and can continuously collect and process sensor data when the processor 101 is in a sleep mode, to ensure normal running of the sensor with low power consumption. In an embodiment, the MCU 103 may be a sensor hub chip. The sensor 114 may include a light sensor and a motion sensor. Specifically, the light sensor may include an ambient light sensor and a proximity sensor. The ambient light sensor may be used to adjust luminance of a display 151 based on brightness of ambient light, and when the terminal device 100 approaches an ear, the proximity sensor may power off a display screen. As a type of motion sensor, an accelerometer sensor may detect values of accelerations in various directions (generally three axes), and may detect values and directions of gravity when the accelerometer sensor is still. The sensor 114 may further include another sensor such as a gyroscope, a barometer, a hygrometer, a thermometer, or an infrared sensor. Details are not described herein. The MCU 103 and the sensor 114 may be integrated into a same chip, or may be separate components and are connected by using a bus.

The modem 107 and the radio frequency module 109 constitute a communications subsystem of the terminal device 100, and are configured to implement main functions of a wireless communication standard protocol such as 3GPP or ETSI. The modem 107 is configured to perform coding/decoding, signal modulation/demodulation, equalization, and the like. The radio frequency module 109 is configured to receive and send a radio signal, and the radio frequency module 109 includes but is not limited to an antenna, at least one amplifier, a coupler, a duplexer, and the like. The radio frequency module 109 cooperates with the modem 107 to implement a wireless communication function. The modem 107 may be used as an independent chip, or may be combined with another chip or circuit to form a system-level chip or an integrated circuit. These chips or integrated circuits may be applied to all terminal devices that implement the wireless communication function, including a mobile phone, a computer, a notebook computer, a tablet computer, a router, a wearable device, a vehicle, a home appliance, and the like.

The terminal device 100 may further perform wireless communication by using the Wi-Fi module 111, the Bluetooth module 113, and the like. The Wi-Fi module 111 is configured to provide, for the terminal device 100, network access that complies with a Wi-Fi related standard protocol. The terminal device 100 may access a Wi-Fi access point by using the Wi-Fi module 111, to access the internet. In some other embodiments, the Wi-Fi module 111 may alternatively be used as a Wi-Fi wireless access point, and may provide Wi-Fi network access for another terminal device. The Bluetooth module 113 is configured to implement short-range communication between the terminal device 100 and another terminal device (for example, a mobile phone or a smartwatch). The Wi-Fi module 111 in this embodiment of this application may be an integrated circuit, a Wi-Fi chip, or the like, and the Bluetooth module 113 may be an integrated circuit, a Bluetooth chip, or the like.

The positioning module 150 is configured to determine a geographical location of the terminal device 100. It may be understood that the positioning module 150 may be specifically a receiver of a positioning system such as a global positioning system (global position system, GPS), a BeiDou navigation satellite system, or a GLONASS in Russia.

The Wi-Fi module 111, the Bluetooth module 113, and the positioning module 150 may be independent chips or integrated circuits, or may be integrated together. For example, in an embodiment, the Wi-Fi module 111, the Bluetooth module 113, and the positioning module 150 may be integrated into a same chip. In another embodiment, the Wi-Fi module 111, the Bluetooth module 113, the positioning module 150, and the MCU 103 may also be integrated into a same chip.

The input/output device 115 includes but is not limited to the display 151, a touchscreen 153, an audio circuit 155, and the like.

The touchscreen 153 may collect a touch event of a user of the terminal device 100 on or near the touchscreen 153 (for example, an operation performed by the user on the touchscreen 153 or near the touchscreen 153 by using any suitable object such as a finger or a stylus), and sends the collected touch event to another component (for example, the processor 101). The operation performed by the user near the touchscreen 153 may be referred to as a floating touch. Through the floating touch, the user may select, move, or drag a target (for example, an icon) without directly touching the touchscreen 153. In addition, the touchscreen 153 may be implemented by using a plurality of types such as a resistive type, a capacitive type, an infrared type, and a surface acoustic wave type.

The display (also referred to as a display screen) 151 is configured to display information input by the user or information displayed to the user. The display 151 may be configured in a form, for example, a liquid crystal display or an organic light-emitting diode. The touchscreen 153 may cover the display 151. After detecting a touch event, the touchscreen 153 transmits the touch event to the processor 101 to determine a type of the touch event, and then the processor 101 may provide corresponding visual output on the display 151 based on the type of the touch event. In FIG. 1, the touchscreen 153 and the display 151 are used as two independent components to implement input and output functions of the terminal device 100. However, in some embodiments, the touchscreen 153 and the display 151 may be integrated to implement the input and output functions of the mobile phone 100. In addition, the touchscreen 153 and the display 151 may be disposed on the front of the terminal device 100 in a full panel form, to implement a bezel-less structure.

The audio circuit 1155, a loudspeaker 116, and a microphone 117 may provide an audio interface between the user and the terminal device 100. The audio circuit 109 may convert received audio data into an electrical signal and then transmit a converted electrical signal to the loudspeaker 113, and the loudspeaker 113 converts the electrical signal into a sound signal for output. In addition, the microphone 114 converts a collected sound signal into an electrical signal, and the audio circuit 109 receives the electrical signal, converts the electrical signal into audio data, and then sends the audio data to for example, another terminal device by using the modem 107 and the radio frequency module 109, or outputs the audio data to the memory 105 for further processing.

In addition, the terminal device 100 may further have a fingerprint recognition function. For example, a fingerprint collection component may be configured on the back of the terminal device 100 (for example, a lower part of a rear-facing camera), or a fingerprint collection component may be configured on the front of the terminal device 100 (for example, a lower part of the touchscreen 153). For another example, a fingerprint collection component may be configured in the touchscreen 153 to implement the fingerprint recognition function. To be specific, the fingerprint collection component may be integrated with the touchscreen 153 to implement the fingerprint recognition function of the terminal device 100. In this case, the fingerprint collection component is configured on the touchscreen 153, and may be a part of the touchscreen 153, or may be configured on the touchscreen 153 in another manner. A main part of the fingerprint collection component in this embodiment of this application is a fingerprint sensor. The fingerprint sensor may use any type of sensing technology, including but not limited to an optical sensing technology, a capacitive sensing technology, a piezoelectric sensing technology, an ultrasonic wave sensing technology, or the like.

Further, the operating system 161 used in the terminal device 100 may be iOS, Android, Microsoft, or another operating system. This is not limited in this embodiment of this application.

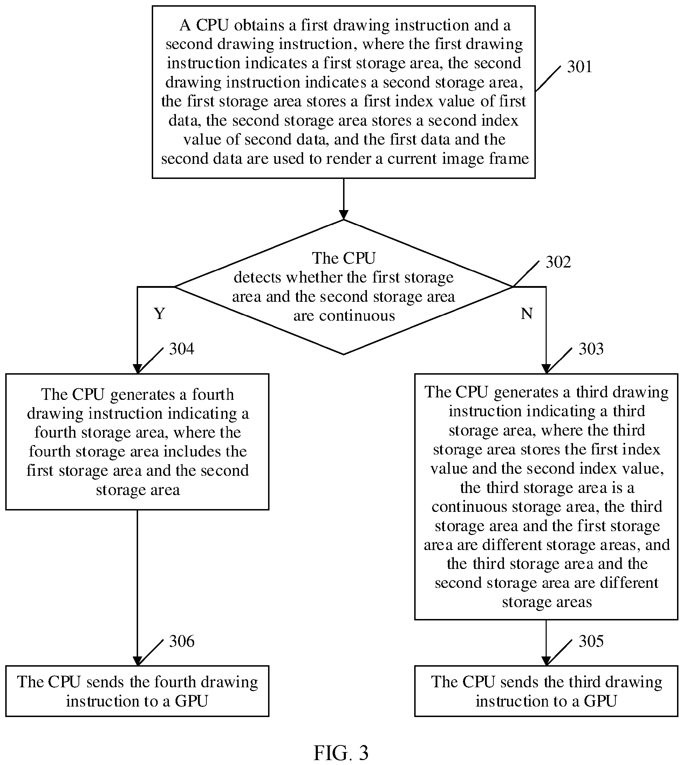

The operating system 161 may perform the steps in the call processing method shown in FIG. 3, and may be specifically implemented by the application processor 101 by executing a program stored in the memory 105.

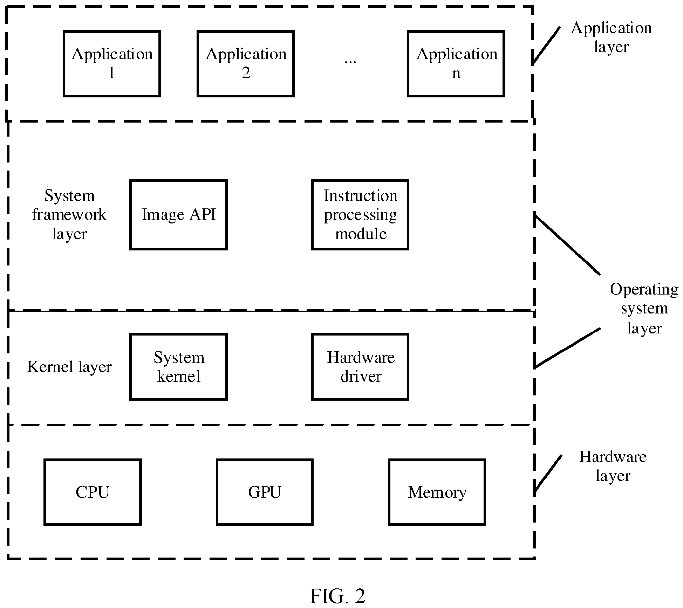

To further understand the relationship between the terminal device and the operating system, the following further describes the relationship with reference to FIG. 2. FIG. 2 is another schematic diagram of a structure of a terminal device according to an embodiment of this application. As shown in FIG. 2, the terminal device may be logically divided into a hardware layer, an operating system layer, and an application layer. The following separately describes the layers.

The hardware layer may include processing devices such as a central processing unit (central processing unit, CPU) and a graphics processing unit (graphic processing unit, GPU) (equivalent to a specific implementation of the processor 101 in FIG. 1), may further include storage devices such as a memory and an external memory (equivalent to a specific implementation of the memory 105 in FIG. 1), and may further include input/output devices such as a speaker, a microphone, and a screen (equivalent to a specific implementation of the I/O device 115 in FIG. 1). Certainly, in addition to this, the hardware layer 450 may further include the power supply, the camera, the radio frequency module, the positioning module, and the Wi-Fi module that are shown in FIG. 1, and may further include other hardware modules that are not shown in FIG. 1, for example, a memory controller and a display controller.

The operating system layer may include a kernel layer and a system framework layer. The kernel layer is configured to provide a bottom-layer system component and a service, for example, a system kernel and a hardware driver. The system kernel may be configured to implement various functions such as power management, memory management, and process management. The hardware driver includes drivers of devices such as a GPU, a camera, a loudspeaker, a microphone, and a positioning module.

The system framework layer is configured to provide various basic common components and services for each application in the application layer, for example, a graphics library and a call processing module configured to implement the method provided in embodiments of this application. The graphics library may also be referred to as a graphics application programming interface (application programming interface, API), for example, an open graphics library (open graphics library, OpenGL) or Vulkan.

The application layer includes one or more applications, for example, camera software, communication software, and office software. After an application is started, the application may initiate a rendering request for a plurality of continuous image frames (for example, a video stream). For any image frame, a rendering request of the image frame usually includes a plurality of draw calls (draw call, DC). Each draw call may enable the GPU to implement rendering of a part of an image in the image frame. Therefore, the plurality of draw calls may enable the GPU to complete rendering of the image frame. Specifically, the application may send the plurality of draw calls of the image frame to the call processing module through the graphics API. Then, the call processing module may process the plurality of draw calls (for example, perform a combination operation) to obtain a processed draw call. Then, the call processing module may send the processed draw call to the GPU through a driver of the GPU, so that the GPU completes rendering of the image frame based on the processed draw call.

It may be understood that, because the call processing module is disposed at the operating system layer of the terminal device, and the operating system is run by the CPU of the terminal device, the steps performed by the call processing module may also be considered as steps performed by the CPU, and details are not described subsequently.

To further understand a process of processing the draw call by the CPU, the following describes the process in detail with reference to FIG. 3 (FIG. 3 is a schematic flowchart of a call processing method according to an embodiment of this application). It should be noted that an application of a terminal device may initiate rendering requests for a plurality of continuous image frames to a CPU, and the CPU processes the rendering requests for all image frames in a similar manner. For ease of description, the following uses one image frame as an example for description, and the image frame is set as a current image frame.

It should be noted that, when initiating the rendering request of the current image frame to the CPU, the application sends a plurality of draw calls of a current image frame to the CPU, and the CPU may divide the plurality of draw calls into a plurality of draw call groups. In the plurality of draw call groups, all draw calls in each draw call group are draw calls continuously received by the CPU (that is, all draw calls in each draw call group are continuous draw calls), and other types of calls received by the CPU are inserted between the draw call groups. For example, when a game application needs to render a picture, the game application needs to send a draw call 1, a draw call 2, a draw call 3, a draw call 4, a draw call 5, and a draw call 6 to the CPU, to complete rendering of the picture. In a process of receiving the seven draw calls, the CPU further receives a data copy call 1 and a data copy call 2 that are sent by the game application. A sequence of receiving calls by the CPU is the draw call 1, the draw call 2, the draw call 3, the data copy call 1, the draw call 4, the draw call 5, the data copy call 2, and the draw call 6. Therefore, the CPU groups the draw call 1, the draw call 2, and the draw call 3 into one group, groups the draw call 4 and the draw call 5 into one group, and groups the draw call 6 into one group.

Because processing performed by the CPU on each draw call group of the current image frame is similar, for ease of description, the following uses a draw call group of the current image frame as an example for description. It is assumed that the draw call group includes a first draw call and a second draw call. As shown in FIG. 3, the method includes the following steps.

301: A CPU obtains a first draw call and a second draw call, where the first draw call indicates a first storage area, the second draw call indicates a second storage area, the first storage area stores a first index value of first data, the second storage area stores a second index value of second data, and the first data and the second data are used to render the current image frame.

After receiving a draw call group including the first draw call and the second draw call, the CPU may parse the first draw call and the second draw call, to obtain information included in the first draw call and information included in the second draw call.

Specifically, the first draw call may include information such as a start location of the first storage area in a memory and a size of the first storage area, and the information may be used to determine a location of the first storage area in the memory (equivalent to that the first draw call may indicate the first storage area). The first storage area stores the first index value, the first index value is a location, in the memory, of a storage area in which the first data is stored (the first index value may also be referred to as an index value of the first data), and the first data is used to render a part of an image in the current image frame. Similarly, the second draw call may include information such as a start location of the second storage area in the memory and a size of the second storage area, and the information may be used to determine a location of the second storage area in the memory (equivalent to that the second draw call may indicate the second storage area). The second storage area stores the second index value, the second index value is a location, in the memory, of a storage area in which the second data is stored (the second index value may also be referred to as an index value of the second data), and the second data is used to render another part of the image in the current image frame.

The first storage area and the second storage area are two storage areas in a vertex index buffer object (element buffer object, EBO) of the memory, and a storage area storing the first data and a storage area storing the second data are two storage areas in a vertex buffer object (vertex buffer object, VBO) of the memory. The EBO and the VBO are two areas pre-allocated in the memory, the VBO stores data used to render the current image frame, and the EBO stores an index value of the data used to render the current image frame.

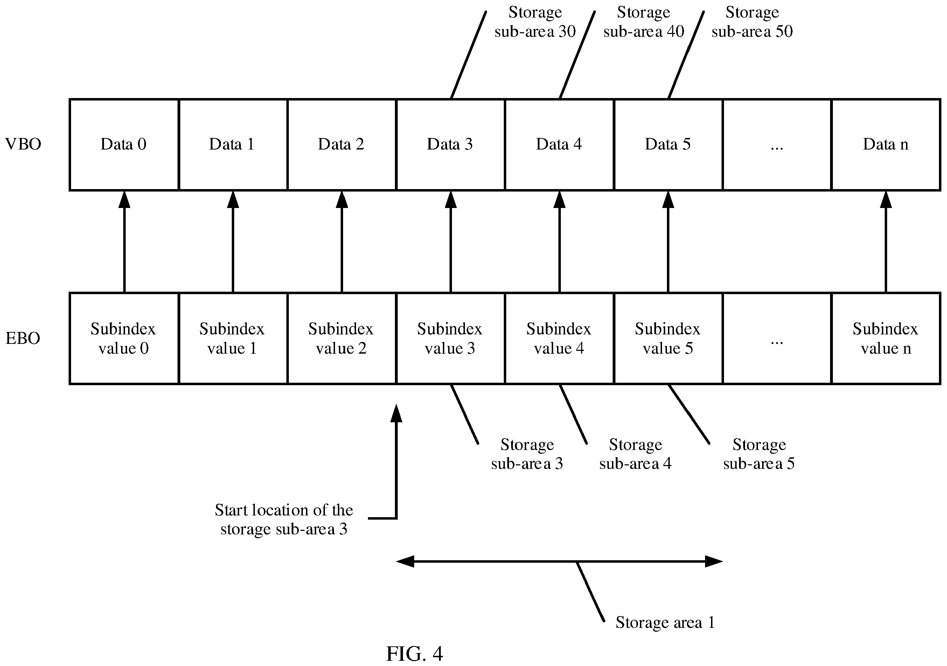

To further understand the foregoing concepts, the following further describes the concepts with reference to FIG. 4. FIG. 4 is a schematic diagram of a correspondence between a VBO and an EBO according to an embodiment of this application. As shown in FIG. 4, an EBO is divided into a plurality of storage sub-areas of an equal size, a size of each storage sub-area is 2 bytes, and each storage sub-area stores one subindex value. The VBO is also divided into a plurality of storage sub-areas of an equal size, and each storage sub-area stores data used to render an image frame. For any subindex value, the subindex value corresponds to one storage sub-area in the VBO (that is, the subindex value is a location of one storage sub-area in the VBO in the memory, and therefore the subindex value corresponds to).

For a draw call received by the CPU, the draw call may include information such as a start location of a storage sub-area in the EBO in the memory, a quantity of subindex values, and a type of the subindex value (which may also be understood as a size of the subindex value, and is generally equal to a size of a storage sub-area in the EBO). A product of the quantity of subindex values and the type of the subindex value is a size of a storage area formed by at least one storage sub-area in the EBO (a quantity of storage sub-areas is equal to the quantity of subindex values). Therefore, a start location, in the memory, of a storage sub-area included in the draw call is the start location of the storage area in the memory. The location of the storage area in the memory may be determined based on the start location of the storage area and the size of the storage area.

Because the storage area is formed by at least one storage sub-area in the EBO, the storage area stores at least one subindex value. The storage area may be found based on the location of the storage area in the memory, and the subindex value of the storage area are read from the storage area. Based on the subindex values, a corresponding storage sub-area may be found in the VBO, and data used to render the image frame is read from the storage sub-area.

As shown in FIG. 4, it is assumed that a draw call includes information such as a start location of a storage sub-area 3 in the EBO, a quantity of subindex values is 3, and a size of a subindex value is 2 bytes. Therefore, a size of a storage area 1 (a storage area formed by the storage sub-area 3, a storage sub-area 4, and a storage sub-area 5 in the EBO) indicated by the draw call is 6 bytes, and a start location of the storage area 1 is the start location of the storage sub-area 3. Therefore, an end location of the storage area 1 may be calculated based on the size of the storage area 1 and the start location of the storage area 1. This is equivalent to obtaining a location of the storage area 1.

Because the storage sub-area 3, the storage sub-area 4, and the storage sub-area 5 respectively store the subindex value 3, the subindex value 4, and the subindex value 5, the storage area 1 may be found based on the location of the storage area 1, and the index values may be read from the storage area 1. Because the subindex value 3, the subindex value 4, and the subindex value 5 are locations of a storage sub-area 30, a storage sub-area 40, and a storage sub-area 50 in the VBO respectively, and the storage sub-area 30, the storage sub-area 40, and the storage sub-area 50 store data 3, data 4, and data 5 respectively, the storage sub-area 30, the storage sub-area 40, and the storage sub-area 50 may be found based on the index values, and the data 3, data 4, and data 5 are read from the storage sub-area 30, the storage sub-area 40, and the storage sub-area 50. It can be learned that the subindex value 3 may also be referred to as a subindex value of the data 3, the subindex value 4 may also be referred to as a subindex value of the data 4, and the subindex value 5 may also be referred to as a subindex value of the data 5.

It should be understood that, in the foregoing example, that the size of the storage sub-area of the EBO is 2 bytes is merely used for example description, and the size of the storage sub-area of the EBO in this embodiment is not limited. The size of the storage sub-area of the EBO may be set based on an actual requirement.

It should be further understood that, based on the example shown in FIG. 4, it can be learned that the storage area 1 is equivalent to the first storage area or the second storage area mentioned in this embodiment. In this case, the first storage area may include at least one storage sub-area in the EBO, the first index value may include at least one subindex value, and the first data may include data stored in the at least one storage sub-area in the VBO. Similarly, the second storage area, the second index value, and the second data have the same situation, and details are not described herein again.

It should be further understood that, in this embodiment, a start location of a storage sub-area in the EBO in the memory may be an offset value of the storage sub-area in the EBO. As shown in FIG. 4, in the EBO, a leftmost side of a storage sub-area 0 is used as a reference point, and an offset value herein is set to 0. In this case, a distance between a leftmost side of the storage sub-area 3 and the leftmost side of the storage sub-area 0 is an offset value of the storage sub-area 3.

It should be further understood that data involved in this embodiment may also be referred to as vertex data (or rendering data), and includes information such as vertex coordinates, normals, colors, and textures. Details are not described subsequently.

302: The CPU detects whether the first storage area and the second storage area are continuous.

After the information included in the first draw call and the information included in the second draw call are obtained, the CPU may detect, based on the information included in the first draw call and the information included in the second draw call, whether the first storage area and the second storage area are continuous.

Specifically, the CPU may detect whether the first storage area and the second storage area are continuous in the following manner: First, the CPU calculates a difference between the start location of the first storage area in the memory and the start location of the second storage area in the memory. Then, the CPU determines whether the difference is equal to the size of the first storage area (it is assumed that the CPU first receives the first draw call). If the difference is equal to the size of the first storage area, it indicates that the first storage area and the second storage area are continuous. If the difference is not equal to the size of the first storage area, it indicates that the first storage area and the second storage area are discontinuous.

303: If the first storage area and the second storage area are discontinuous, the CPU generates a third draw call indicating a third storage area, where the third storage area stores the first index value and the second index value, the third storage area is a continuous storage area, the third storage area and the first storage area are different storage areas, and the third storage area and the second storage area are different storage areas.

If the difference between the start location of the first storage area in the memory and the start location of the second storage area in the memory is not equal to the size of the first storage area, the CPU may determine that the first storage area and the second storage area are discontinuous. Therefore, the CPU may generate the third draw call indicating the third storage area, where the third storage area stores the first index value and the second index value, and the third storage area is a continuous storage area in the EBO.

Specifically, the CPU may generate the third draw call in the following manner: The CPU applies to the EBO for a new continuous storage area as the third storage area, where a size of the third storage area is generally equal to a sum of the size of the first storage area and the size of the second storage area. Then, the CPU reads the first index value from the first storage area, reads the second index value from the second storage area, and stores the first index value and the second index value in the third storage area. Finally, the CPU obtains a start location of the third storage area in the memory, and generates the third draw call including the start location of the third storage area in the memory and the size of the third storage area. Therefore, the third draw call may indicate the third storage area.

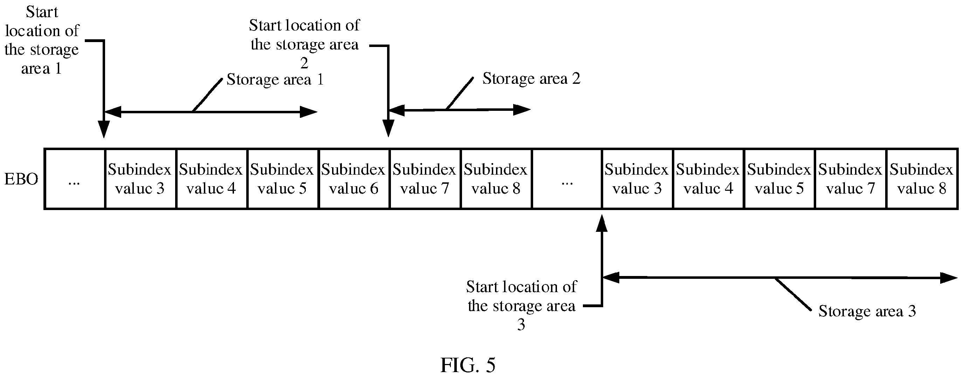

As shown in FIG. 5 (FIG. 5 is a schematic diagram of an EBO according to an embodiment of this application), it is assumed that a draw call 1 includes information such as a start location of a storage area 1 and a size of the storage area 1, and the size of the storage area 1 is 6 bytes (that is, a quantity of subindex values included in the draw call 1 is 3, and a size of the subindex value is 2 bytes). A draw call 2 includes information such as a start location of a storage area 2 and a size of the storage area 2, and the size of the storage area 2 is 4 bytes (that is, a quantity of subindex values included in the draw call 2 is 2, and a size of the subindex value is 2 bytes).

In the EBO, because a difference between the start location of the storage area 1 and the start location of the storage area 2 is 8 bytes, and the difference is greater than the size of the storage area 1, the CPU may determine that the storage area 1 and the storage area 2 are discontinuous. In this case, the CPU may apply for a storage area 3 whose size is 10 bytes in the EBO, and store a subindex value 3, a subindex value 4, a subindex value 5 in the storage area 1, and a subindex value 7 and a subindex value 8 in the storage area in sequence into the storage area 3. Finally, the CPU may generate a draw call 3 that includes information such as a start location of the storage area 3 and a size of the storage area 3, where the size of the storage area 3 is 10 bytes (that is, a quantity of subindex values included in the draw call 3 is 5, and a size of the subindex value is 2 bytes).

304: If the first storage area and the second storage area are continuous, the CPU generates a fourth draw call indicating a fourth storage area, where the fourth storage area includes the first storage area and the second storage area.

If the difference between the start location of the first storage area in the memory and the start location of the second storage area in the memory is equal to the size of the first storage area, the CPU may determine that the first storage area and the second storage area are continuous. Because the first storage area and the second storage area are continuous, the CPU may consider the first storage area and the second storage area as a whole, that is, the fourth storage area. It may be understood that a size of the fourth storage area is equal to the sum of the size of the first storage area and the size of the second storage area. A start location of the fourth storage area in the memory is the start location of the first storage area in the memory. The CPU may generate the fourth draw call including the start location of the first storage area and the size of the fourth storage area. Therefore, the fourth draw call may indicate the fourth storage area.

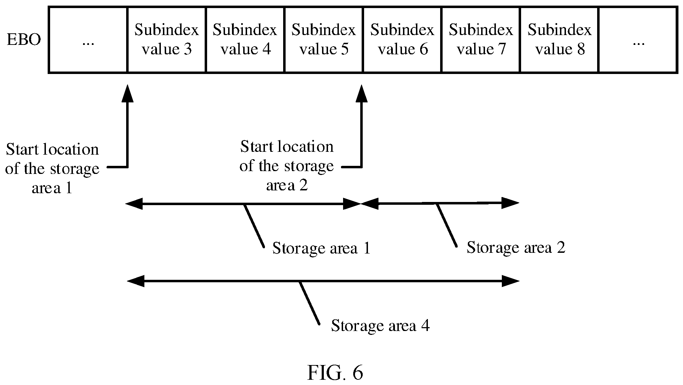

As shown in FIG. 6 (FIG. 6 is another schematic diagram of an EBO according to an embodiment of this application), it is assumed that a draw call 1 includes information such as a start location of a storage area 1 and a size of the storage area 1, and the size of the storage area 1 is 6 bytes (that is, a quantity of subindex values included in the draw call 1 is 3, and a size of the subindex value is 2 bytes). A draw call 2 includes information such as a start location of a storage area 2 and a size of the storage area 2, and the size of the storage area 2 is 4 bytes (that is, a quantity of subindex values included in the draw call 2 is 2, and a size of the subindex value is 2 bytes).

In the EBO, because a difference between the start location of the storage area 1 and the start location of the storage area 2 is 6 bytes, and the difference is equal to the size of the storage area 1, the CPU may determine that the storage area 1 and the storage area 2 are continuous. In this case, the CPU may consider the storage area 1 and the storage area 2 as a whole, that is, a storage area 4, and generate a draw call 4 including information such as a start location of the storage area 1 and a size of the storage area 4. The size of the storage area 4 is 10 bytes (that is, a quantity of subindex values included in the draw call 4 is 5, and a size of the subindex value is 2 bytes).

305: The CPU sends the third draw call to a GPU.

After obtaining the third draw call, the CPU sends the third draw call to the GPU. After receiving the third draw call, the CPU may parse the third draw call to obtain information such as the start location of the third storage area in the memory and the size of the third storage area. Then, the GPU may determine a location of the third storage area in the memory based on the information, and find the third storage area in the EBO based on the location, to obtain the first index value and the second index value from the third storage area. Then, the GPU finds a corresponding storage area in the VBO based on the first index value, obtains the first data from the storage area, finds a corresponding storage area in the VBO based on the second index value, and obtains the second data from the storage area. Finally, the GPU may implement rendering of the current image frame by using the first data and the second data.

306: The CPU sends the fourth draw call to a GPU.

After obtaining the fourth draw call, the CPU sends the fourth draw call to the GPU. After receiving the fourth draw call, the CPU may parse the fourth draw call to obtain information such as the start location of the first storage area in the memory and the size of the fourth storage area. Then, the GPU may determine a location of the fourth storage area in the memory based on the information, and find the fourth storage area in the EBO based on the location, to obtain the first index value and the second index value from the fourth storage area. Then, the GPU finds a corresponding storage area in the VBO based on the first index value, obtains the first data from the storage area, finds a corresponding storage area in the VBO based on the second index value, and obtains the second data from the storage area. Finally, the GPU may implement rendering of the current image frame by using the first data and the second data.

It should be understood that, in this embodiment, only that a draw call group received by the CPU includes two draw calls (that is, the draw call group includes only the first draw call and the second draw call) is used as an example for description, and a quantity of draw calls included in the draw call group is not limited. For example, the draw call group may include three draw calls, that is, the first draw call, the second draw call, and a seventh draw call, where the seventh draw call indicates the seventh storage area. In this case, in step 302, whether the second storage area and a seventh storage area are continuous further needs to be detected. For a specific process, refer to a related description part of detecting whether the first storage area and the second storage area are continuous. In step 303, a determining condition for generating the third draw call indicating the third storage area is changed to: If the first storage area and the second storage area are discontinuous, and the second storage area and the seventh storage area are discontinuous, further, the size of the third storage area is a sum of the size of the first storage area, the size of the second storage area, and the size of the seventh storage area. In step 304, a determining condition for generating the fourth draw call indicating the fourth storage area is changed to: If the first storage area and the second storage area are continuous, and the second storage area and the seventh storage area are continuous, further, the fourth storage area includes the first storage area, the second storage area, and the seventh storage area. Certainly, the draw call group may further include four draw calls, five draw calls, and the like. For details, refer to related descriptions of the three draw calls. Details are not described herein again.

In this embodiment of this application, the CPU receives the first draw call and the second draw call from the application, where the first storage area indicated by the first draw call stores the first index value of the first data that is used to render the current image frame, and the second storage area indicated by the second draw call stores the second index value of the second data that is used to render the current image frame. If the first storage area and the second storage area are discontinuous, the third draw call indicating the third storage area is generated, where the third storage area is a continuous storage area. Because the third storage area indicated by the third draw call stores the first index value and the second index value, the CPU only needs to send the third draw call to the GPU, so that the GPU may obtain the first data and the second data based on the third draw call, to render the current image frame by using the first data and the second data. In this way, the CPU may optimize out a part of draw calls, and send only a few draw calls to the GPU, that is, a quantity of draw calls to be processed by the CPU is greatly reduced, thereby saving a specific CPU resource and reducing CPU load.

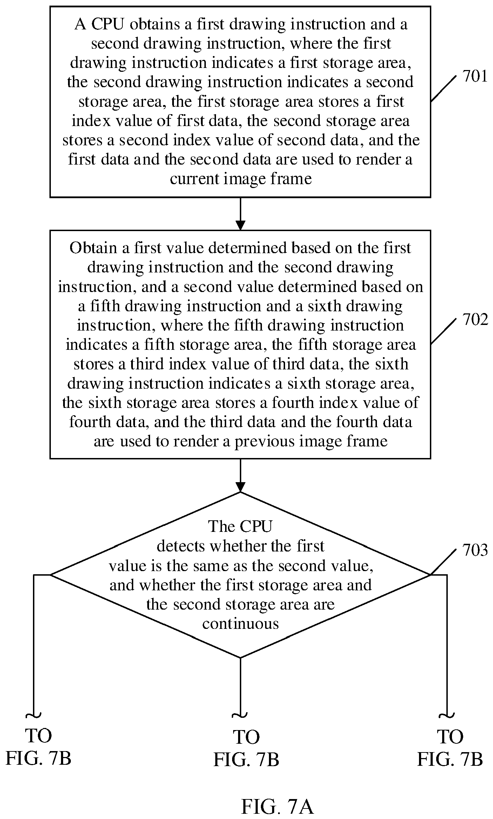

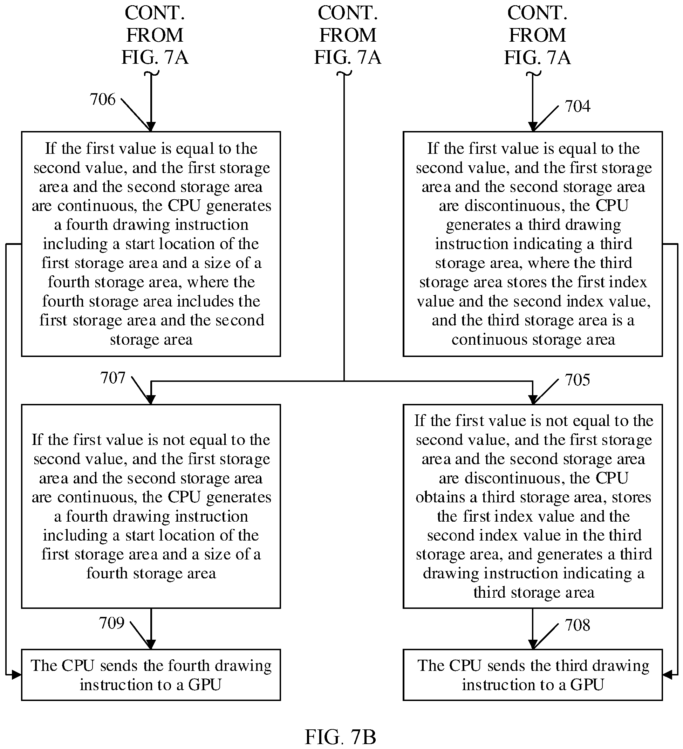

FIG. 7A and FIG. 7B are another schematic flowchart of a call processing method according to an embodiment of this application. For ease of description, the following still uses a draw call group of a current image frame as an example for description. It is assumed that the draw call group includes a first draw call and a second draw call. As shown in FIG. 7A and FIG. 7B, the method includes the following steps.

701: A CPU obtains a first draw call and a second draw call, where the first draw call indicates a first storage area, the second draw call indicates a second storage area, the first storage area stores a first index value of first data, the second storage area stores a second index value of second data, and the first data and the second data are used to render the current image frame.

In this embodiment, for descriptions of step 701, refer to a related description part of step 301 in the embodiment shown in FIG. 3. Details are not described herein again.

702: Obtain a first value determined based on the first draw call and the second draw call, and a second value determined based on a fifth draw call and a sixth draw call, where the fifth draw call indicates a fifth storage area, the fifth storage area stores a third index value of third data, the sixth draw call indicates a sixth storage area, the sixth storage area stores a fourth index value of fourth data, and the third data and the fourth data are used to render a previous image frame.

703: The CPU detects whether the first value is the same as the second value, and whether the first storage area and the second storage area are continuous.

After obtaining information included in the first draw call and information included in the second draw call, the CPU may determine the first value based on the information included in the first draw call and the information included in the second draw call. Specifically, the CPU may perform hash calculation by using information such as a location of the first storage area in a memory, a size of the first storage area, a location of the second storage area in the memory, and a size of the second storage area, to obtain the first value. This is equivalent to performing hash calculation on a draw call group including the first draw call and the second draw call, to obtain the first value.

It should be noted that, when processing a rendering request of the previous image frame, the CPU has performed hash calculation on each draw call group of the previous image frame, to obtain a value obtained by performing hash calculation on each draw call group of the previous image frame. Therefore, after the CPU obtains the first value when processing a rendering request of the current image frame, the CPU may compare the first value with values obtained by performing hash calculation on some draw call groups (the draw call groups generally include only two draw calls) of the previous image frame, to determine whether a value obtained by performing hash calculation on a draw call group of the previous image frame is equal to the first value. If the value exists, step 704 or step 706 is performed respectively. If the value does not exist, step 705 or step 707 is performed respectively.

For ease of description, the following is described by using any draw call group of the previous image frame. It is assumed that the draw call group includes the fifth draw call and the sixth draw call. The fifth draw call indicates the fifth storage area, and the fifth storage area stores the third index value of the third data. The sixth draw call indicates the sixth storage area, and the sixth storage area stores the fourth index value of the fourth data. The third data and the fourth data are used to render the previous image frame. The CPU may directly obtain the second value obtained by performing hash calculation by using information such as a location of the fifth storage area in the memory, a size of the fifth storage area, a location of the sixth storage area in the memory, and a size of the sixth storage area, compare the second value with the first value, detect whether the second value is equal to the first value, and detect whether the first storage area and the second storage area are continuous.

For a description whether the CPU detects whether the first storage area and the second storage area are continuous, refer to a related description part of step 302 in the embodiment shown in FIG. 3. Details are not described herein again.

704: If the first value is equal to the second value, and the first storage area and the second storage area are discontinuous, the CPU generates a third draw call indicating a third storage area, where the third storage area stores the first index value and the second index value, and the third storage area is a continuous storage area.

If the first value is equal to the second value, and the first storage area and the second storage area are discontinuous, it indicates that the first draw call and the fifth draw call are the same call, the second draw call and the sixth draw call are the same call, the first storage area and the fifth storage area are the same storage area, the second storage area and the sixth storage area are the same storage area, the first index value and the third index value are the same index value, the second index value and the fourth index value are the same index value, the first data and the third data are the same data, and the second data and the fourth data are the same data. In this case, in a process of processing the draw call group including the fifth draw call and the sixth draw call in the previous image frame, the CPU has applied to an EBO for a continuous storage area, that is, the third storage area (a size of the third storage area is generally equal to a sum of the size of the first storage area and the size of the second storage area), and stores the first index value and the second index value in the third storage area. It can be learned that the third storage area has been created before. Therefore, in a process of processing the draw call group that includes the first draw call and the second draw call and that is of the current image frame, the CPU may directly reuse the created third storage area, that is, directly generate the third draw call including information such as a start location of the third storage area and a size of the third storage area.

705: If the first value is not equal to the second value, and the first storage area and the second storage area are discontinuous, the CPU obtains a third storage area, stores the first index value and the second index value in the third storage area, and generates a third draw call indicating the third storage area.

If the first value is not equal to the second value, and the first storage area and the second storage area are discontinuous, it indicates that the first draw call and the fifth draw call are different calls, the second draw call and the sixth draw call are different calls, the first storage area and the fifth storage area are different storage areas, the second storage area and the sixth storage area are different storage areas, the first index value and the third index value are different index values, the second index value and the fourth index value are different index values, the first data and the third data are different data, and the second data and the fourth data are different data. In this case, the third storage area is not created before. Therefore, in a process of processing the draw call group that includes the first draw call and the second draw call and that is of the current image frame, the CPU needs to apply to the EBO for a continuous new storage area as the third storage area. A size of the third storage area is generally equal to a sum of the size of the first storage area and the size of the second storage area. Then, the CPU reads the first index value from the first storage area, reads the second index value from the second storage area, and stores the first index value and the second index value in the third storage area. Finally, the CPU obtains a start location of the third storage area in the memory, and generates the third draw call including the start location of the third storage area in the memory and the size of the third storage area. Therefore, the third draw call may indicate the third storage area.

706: If the first value is equal to the second value, and the first storage area and the second storage area are continuous, the CPU generates a fourth draw call including a start location of the first storage area and a size of a fourth storage area, where the fourth storage area includes the first storage area and the second storage area.

707: If the first value is not equal to the second value, and the first storage area and the second storage area are continuous, the CPU generates a fourth draw call including a start location of the first storage area and a size of the fourth storage area.

Regardless of whether the first value is equal to the second value, provided that the first storage area and the second storage area are continuous, the CPU considers the first storage area and the second storage area as a whole, that is, the fourth storage area, where the size of the fourth storage area is equal to the sum of the size of the first storage area and the size of the second storage area, and the start location of the fourth storage area in a memory is the start location of the first storage area in the memory. Therefore, the CPU may generate the fourth draw call including the start location of the first storage area and the size of the fourth storage area. It can be learned that the fourth draw call may indicate the fourth storage area.

708: The CPU sends the third draw call to a GPU.

709: The CPU sends the fourth draw call to a GPU.

For descriptions of step 708 and step 709, refer to related descriptions of step 305 and step 306 in the embodiment shown in FIG. 3. Details are not described herein again.

It should be understood that, in this embodiment, only that a draw call group of the current image frame received by the CPU includes two draw calls (that is, the draw call group includes only the first draw call and the second draw call) is used as an example for description, and a quantity of draw calls included in the draw call group is not limited. For example, the draw call group may include three draw calls, that is, the first draw call, the second draw call, and a seventh draw call, where the seventh draw call indicates the seventh storage area. In this case, in step 702, the second value is obtained through calculation based on the fifth draw call, the sixth draw call, and an eighth draw call (that is, a draw call group of a previous image frame used for comparing values also needs to include three draw calls). In step 703, whether the second storage area and a seventh storage area are continuous further needs to be detected. For a specific process, refer to a related description part of detecting whether the first storage area and the second storage area are continuous. In step 704 and step 705, a determining condition for generating the third draw call indicating the third storage area is changed to: If the first storage area and the second storage area are discontinuous, and the second storage area and the seventh storage area are discontinuous, further, the size of the third storage area is a sum of the size of the first storage area, the size of the second storage area, and the size of the seventh storage area. In step 706 and step 707, a determining condition for generating the fourth draw call indicating the fourth storage area is changed to: If the first storage area and the second storage area are continuous, and the second storage area and the seventh storage area are continuous, further, the fourth storage area includes the first storage area, the second storage area, and the seventh storage area. Certainly, the draw call group of the current image frame may further include four draw calls, five draw calls, and the like. For details, refer to related descriptions of the three draw calls. Details are not described herein again.

In this embodiment of this application, the CPU places index values in discontinuous storage areas into a continuous storage area, and only a few memory resources need to be used to optimize out a part of draw calls. Therefore, the CPU sends only a few draw calls to the GPU, that is, a quantity of draw calls to be processed by the CPU is greatly reduced, thereby saving a specific CPU resource and reducing CPU load. Further, the CPU further compares hash values between continuous image frames, so that in a processing process of the current image frame, a memory resource that has been used to optimize a draw call in a processing process of the previous image frame may be reused, thereby improving memory resource utilization.

In addition, the call processing method provided in this embodiment of this application and the call processing method in the conventional technology are applied to a same application, so that a comparison result of test data of the application in this embodiment of this application and that in the conventional technology may be obtained, as shown in Table 1.

**Table 1**

| Setting | Full frame | Average frame rate/frame | Low frame rate | Jitter rate | Frame freezing times per hour | Worst frame loss | Normalized current | Single-frame power consumption |
|---|---|---|---|---|---|---|---|---|
| Conventio nal technology | 60 | 58.6 | 0% | 2.34% | 0 | 15 | 924.12 | 15.7699659 |
| This application | 60 | 60.4 | 0% | 0.00% | 0 | 2 | 892.94 | 14.7837748 |

It can be learned from Table 1 that, compared with test data in the conventional technology, in the test data of this application in this embodiment of this application, an average frame rate is increased from 58.6 fps to 60.4 fps, and a frame rate is increased by 1.8 fps; power consumption is reduced from 924.14 mA to 892.94 mA, and power consumption is reduced by 31.18 mA; a jitter rate is reduced from 2.34% to 0.00%, worst frame loss is reduced from 15 to 2; and a single frame power is increased from 15.7 mA to 14.8 mA.

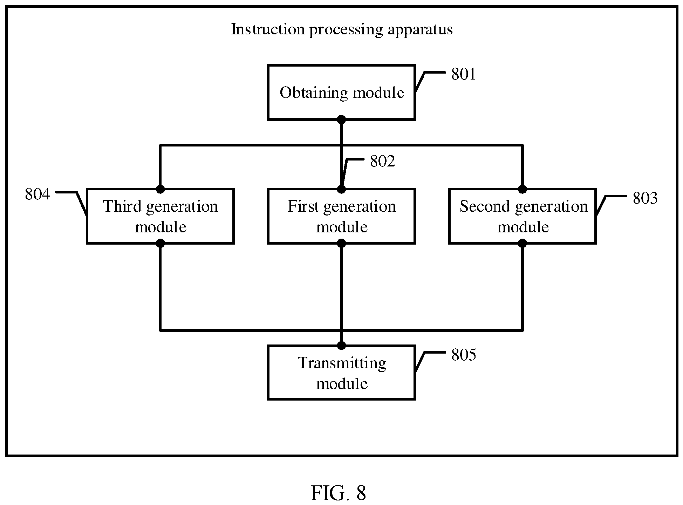

The foregoing describes in detail the call processing method provided in embodiments of this application. The following describes a call processing apparatus provided in embodiments of this application. FIG. 8 is a schematic diagram of a structure of a call processing apparatus according to an embodiment of this application. As shown in FIG. 8, the call processing apparatus may be the foregoing call processing module, and the apparatus includes:
an obtaining module 801, configured to obtain a first draw call and a second draw call; and
a first generation module 802, configured to generate, if a first storage area indicated by the first draw call and a second storage area indicated by the second draw call are discontinuous, a third draw call indicating a third storage area.

The first storage area stores a first index value of first data, the second storage area stores a second index value of second data, the third storage area stores the first index value and the second index value, the third storage area is a continuous storage area, and the first data and the second data are used to render a current image frame.

In a possible implementation, the first draw call includes a start location of the first storage area and a size of the first storage area, the second draw call includes a start location of the second storage area, and the first generation module 802 is configured to generate, if a difference between the start location of the first storage area and the start location of the second storage area is not equal to the size of the first storage area, the third draw call indicating the third storage area.

In a possible implementation, the first generation module 802 is configured to: obtain the third storage area if the difference between the start location of the first storage area and the start location of the second storage area is not equal to the size of the first storage area; store the first index value and the second index value into the third storage area; and generate the third draw call including a start location of the third storage area and a size of the third storage area.

In a possible implementation, the apparatus further includes a second generation module 803, configured to generate, if the difference between the start location of the first storage area and the start location of the second storage area is equal to the size of the first storage area, a fourth draw call including the start location of the first storage area and a size of a fourth storage area, and the fourth storage area includes the first storage area and the second storage area.

In a possible implementation, the first generation module 802 is configured to obtain the third storage area if a first value determined based on the first draw call and the second draw call is not equal to a second value determined based on a fifth draw call and a sixth draw call, and the difference between the start location of the first storage area and the start location of the second storage area is not equal to the size of the first storage area, where the fifth draw call indicates a fifth storage area, the fifth storage area stores a third index value of third data, the sixth draw call indicates a sixth storage area, the sixth storage area stores a fourth index value of fourth data, and the third data and the fourth data are used to render a previous image frame.

In a possible implementation, the apparatus further includes a third generation module 804, configured to generate, if the first value is equal to the second value, and the difference between the start location of the first storage area and the start location of the second storage area is not equal to the size of the first storage area, the third draw call including the start location of the third storage area and the size of the third storage area.

In a possible implementation, the first value is a value obtained by performing hash calculation based on the first draw call and the second draw call, and the second value is a value obtained by performing hash calculation based on the fifth draw call and the sixth draw call.

In a possible implementation, the apparatus further includes a sending module 805, configured to send the third draw call to a GPU.

In a possible implementation, the apparatus further includes a sending module 805, configured to send the fourth draw call to a GPU.

In a possible implementation, the first draw call and the second draw call are continuous draw calls.

It should be noted that content such as information exchange between the modules/units of the apparatus and the execution processes thereof is based on the same idea as that of the method embodiments of this application, and produces the same technical effects as that of the method embodiments of this application. For specific content, refer to the foregoing descriptions in the method embodiments of this application. Details are not described herein again.

An embodiment of this application further relates to a computer storage medium. The computer storage medium stores one or more instructions. When the one or more instructions are executed by one or more computers, the one or more computers are enabled to implement the method shown in FIG. 3 or FIG. 7A and FIG. 7B.

An embodiment of this application further relates to a computer program product. The computer program product stores instruction. When the instructions are executed by a computer, the computer is enabled to implement the method shown in FIG. 3 or FIG. 7A and FIG. 7B.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A call processing method, wherein the method comprises:
obtaining a first draw call and a second draw call; and
generating, if a first storage area indicated by the first draw call and a second storage area indicated by the second draw call are discontinuous, a third draw call indicating a third storage area, wherein
the first storage area stores a first index value of first data, the second storage area stores a second index value of second data, the third storage area stores the first index value and the second index value, the third storage area is a continuous storage area, and the first data and the second data are used to render a current image frame.

2. The method according to claim 1, wherein the first draw call comprises a start location of the first storage area and a size of the first storage area, the second draw call comprises a start location of the second storage area, and the generating, if a first storage area indicated by the first draw call and a second storage area indicated by the second draw call are discontinuous, a third draw call indicating a third storage area comprises:
generating, if a difference between the start location of the first storage area and the start location of the second storage area is not equal to the size of the first storage area, the third draw call indicating the third storage area.

3. The method according to claim 2, wherein the generating, if a difference between the start location of the first storage area and the start location of the second storage area is not equal to the size of the first storage area, the third draw call indicating the third storage area comprises:
obtaining the third storage area if the difference between the start location of the first storage area and the start location of the second storage area is not equal to the size of the first storage area;
storing the first index value and the second index value into the third storage area; and
generating the third draw call comprising a start location of the third storage area and a size of the third storage area.

4. The method according to claim 2 or 3, wherein the method further comprises:
generating, if the difference between the start location of the first storage area and the start location of the second storage area is equal to the size of the first storage area, a fourth draw call comprising the start location of the first storage area and a size of a fourth storage area, wherein the fourth storage area comprises the first storage area and the second storage area.

5. The method according to claim 3, wherein the obtaining the third storage area if the difference between the start location of the first storage area and the start location of the second storage area is not equal to the size of the first storage area comprises:
obtaining the third storage area if a first value determined based on the first draw call and the second draw call is not equal to a second value determined based on a fifth draw call and a sixth draw call, and the difference between the start location of the first storage area and the start location of the second storage area is not equal to the size of the first storage area, wherein
the fifth draw call indicates a fifth storage area, the fifth storage area stores a third index value of third data, the sixth draw call indicates a sixth storage area, the sixth storage area stores a fourth index value of fourth data, and the third data and the fourth data are used to render a previous image frame.

6. The method according to claim 5, wherein the method further comprises:
generating, if the first value is equal to the second value, and the difference between the start location of the first storage area and the start location of the second storage area is not equal to the size of the first storage area, the third draw call comprising the start location of the third storage area and the size of the third storage area.

7. The method according to claim 5 or 6, wherein the first value is a value obtained by performing hash calculation based on the first draw call and the second draw call, and the second value is a value obtained by performing hash calculation based on the fifth draw call and the sixth draw call.

8. The method according to claim 1, 2, 3, or 6, wherein after the generating a third draw call indicating a third storage area, the method further comprises:
sending the third draw call to a graphics processing unit GPU.

9. The method according to claim 4, wherein after the generating a fourth draw call comprising the size of the first storage area and a size of a fourth storage area, the method further comprises:
sending the fourth draw call to a GPU.

10. The method according to any one of claims 1 to 9, wherein the first draw call and the second draw call are continuous draw calls.

11. A call processing apparatus, wherein the apparatus comprises:
an obtaining module, configured to obtain a first draw call and a second draw call; and
a first generation module, configured to generate, if a first storage area indicated by the first draw call and a second storage area indicated by the second draw call are discontinuous, a third draw call indicating a third storage area, wherein
the first storage area stores a first index value of first data, the second storage area stores a second index value of second data, the third storage area stores the first index value and the second index value, the third storage area is a continuous storage area, and the first data and the second data are used to render a current image frame.

12. The apparatus according to claim 11, wherein the first draw call comprises a start location of the first storage area and a size of the first storage area, the second draw call comprises a start location of the second storage area, and the first generation module is configured to generate, if a difference between the start location of the first storage area and the start location of the second storage area is not equal to the size of the first storage area, the third draw call indicating the third storage area.

13. The apparatus according to claim 12, wherein the first generation module is configured to:
obtain the third storage area if the difference between the start location of the first storage area and the start location of the second storage area is not equal to the size of the first storage area;
store the first index value and the second index value into the third storage area; and
generate the third draw call comprising a start location of the third storage area and a size of the third storage area.

14. The apparatus according to claim 12 or 13, wherein the apparatus further comprises a second generation module, configured to generate, if the difference between the start location of the first storage area and the start location of the second storage area is equal to the size of the first storage area, a fourth draw call comprising the start location of the first storage area and a size of a fourth storage area, and the fourth storage area comprises the first storage area and the second storage area.

15. The apparatus according to claim 13, wherein the first generation module is configured to obtain the third storage area if a first value determined based on the first draw call and the second draw call is not equal to a second value determined based on a fifth draw call and a sixth draw call, and the difference between the start location of the first storage area and the start location of the second storage area is not equal to the size of the first storage area, wherein
the fifth draw call indicates a fifth storage area, the fifth storage area stores a third index value of third data, the sixth draw call indicates a sixth storage area, the sixth storage area stores a fourth index value of fourth data, and the third data and the fourth data are used to render a previous image frame.

16. The apparatus according to claim 15, wherein the apparatus further comprises a third generation module, configured to, if the first value is equal to the second value, and the difference between the start location of the first storage area and the start location of the second storage area is not equal to the size of the first storage area, generate the third draw call comprising the start location of the third storage area and the size of the third storage area.

17. The apparatus according to claim 15 or 16, wherein the first value is a value obtained by performing hash calculation based on the first draw call and the second draw call, and the second value is a value obtained by performing hash calculation based on the fifth draw call and the sixth draw call.

18. The apparatus according to claim 11, 12, 13, or 16, wherein the apparatus further comprises a sending module, configured to send the third draw call to a GPU.

19. The apparatus according to claim 14, wherein the apparatus further comprises a sending module, configured to send the fourth draw call to a GPU.

20. The apparatus according to any one of claims 11 to 19, wherein the first draw call and the second draw call are continuous draw calls.

21. A terminal device, wherein the terminal device comprises a memory and a processor, the memory stores code, the processor is configured to execute the code, and when the code is executed, the terminal device performs the method according to any one of claims 1 to 10.

22. A computer storage medium, wherein the computer storage medium stores one or more instructions, and when the instructions are executed by one or more computers, the one or more computers are enabled to perform the method according to any one of claims 1 to 10.

23. A computer program product, wherein the computer program product stores instructions, and when the instructions are executed by a computer, the computer is enabled to perform the method according to any one of claims 1 to 10.
